Europäisches Patentamt

European Patent Office

Office européen des brevets

(19)

(11) Numéro de publication: **0 299 818**
**A1**

(12) **DEMANDE DE BREVET EUROPEEN**

(21) Numéro de dépôt: 88401519.9

(22) Date de dépôt: 17.06.88

(51) Int. Cl.⁴: **G 11 B 20/18**
**G 11 B 20/10, G 11 B 17/00**

(30) Priorité: 26.06.87 FR 8709070

(43) Date de publication de la demande:
18.01.89 Bulletin 89/03

(84) Etats contractants désignés:
AT BE CH DE ES GB GR IT LI LU NL SE

(71) Demandeur: EDUVISION S.A.
31, Cours des Juilliottes B.P. No.58
F-94702 Maisons-Alfort Cédex (FR)

(72) Inventeur: Morel, Bernard
127, rue de Flandre
F-75019 Paris (FR)

Broussaud, Georges
43, avenue Jean Racine
F-92330 Sceaux (FR)

(74) Mandataire: Bugnon-Hays, Claudine
PATCO S.A. 10, rue Vivienne
F-75002 Paris (FR)

(54) Procédé de codage de données informatiques pour transmission aux normes vidéo, vidéodisque mettant en oeuvre ledit procédé et interface d'exploitation d'un tel vidéodisque.

(57) Procédé de codage de données informatiques en vue de leur adaptation et transmission aux normes vidéo, consistant à mettre en oeuvre un code auto-correcteur les transformant en images fictives de M mots de N bits de départ.

Ledit code transforme lesdits mots de N bits en N lignes de k bits, le poids de chaque bit étant associé à une ligne de même rang que le poids dudit bit de départ, l'ordre des bits dans la ligne étant défini préalablement de façon prédéterminée dans chacun des blocs.

Un vidéodisque, dont au moins certaines spires contiennent des images correspondant à des données informatiques, et une interface d'exploitation d'un tel vidéodisque.

FIG. 2

EP 0 299 818 A1

Bundesdruckerei Berlin

## Description

### Procédé de codage de données informatiques pour transmission aux normes vidéo, vidéodisque mettant en oeuvre ledit procédé et interface d'exploitation d'un tel vidéodisque

La présente invention concerne un procédé de codage et de restitution de données informatiques transmises aux normes vidéo, notamment pour l'enregistrement et la restitution à partir du support du type vidéodisque, le vidéodisque et l'interface d'exploitation d'un tel vidéodisque mettant en oeuvre ledit procédé.

La transmission de données informatiques numériques nécessite un très haut degré de fiabilité et le taux d'erreur acceptable est de l'ordre de 10 puissanse - 12, alors que le rapport signal sur bruit correspondant à un taux d'erreurs acceptable pour des signaux vidéo ou audio est de l'ordre de 10 puissance - 4.

Pour atteindre des taux d'erreur compatibles avec les impératifs liés à l'exploitation de données informatiques, on connaît l'utilisation de codes auto-correcteurs introduisant une redondance dans les données et permettant de corriger des erreurs aléatoires et, dans certains cas, des séquences de deux à trois erreurs successives.

Ces procédés ne permettent toutefois pas de remédier à des perturbations transitoires affectant une séquence du signal corrélée avec le support du signal.

Ce type de perturbations, appelé "drop-out" en terminologie anglo-saxonne se trouve dans le cas d'enregistrements sur des supports de type vidéodisque ou magnétique.

Dans le cas d'enregistrement sur vidéodisque, ces perturbations peuvent provenir de défauts affectant la matrice, se traduisant par des lacunes affectant un même point de plusieurs spires successives.

Ce type de perturbations est essentiellement corrélé avec le disque et sa correction implique le recours à un code auto-correcteur très puissant, donc cher.

La présente invention a pour objet un procédé de codage de données informatiques pour adaptation et transmission aux normes vidéo, consistant à coder préalablement les données à l'aide d'un code auto-correcteur les transformant en images fictives de M mots de N bits qui sont transcrites en blocs de N lignes de k bits, le poids de chaque bit étant associé à une ligne de même rang que le poids dudit bit de départ, l'ordre des bits dans la ligne étant défini préalablement de façon déterminée dans chacun des blocs.

Le procédé selon la présente invention a pour avantage une répartition amorphe des données informatiques permettant de supprimer la corrélation entre des défauts physiques du support de transmission et la répartition des perturbations du signal transmis.

La répartition des erreurs et perturbations retrouve ainsi un caractère aléatoire permettant d'atteindre le taux d'erreur requis par l'emploi d'un code auto-correcteur.

L'ordre des bits peut être prédéterminé de façon différente dans chacun des blocs afin de réaliser, en outre, un codage ou un cryptage du signal.

Selon une variante, l'ordre des bits dans la ligne est défini préalablement de façon identique dans chacun des blocs. Ce mode de réalisation permet de simplifier les circuits et/ou les programmes de codage et de décodage.

Selon une variante préférée, l'ordre des bits dans une ligne correspond au rang module k du mot qui contenait ledit bit de départ à la sortie du code auto-correcteur, le rang d'une ligne correspondant au poids des bits de départ correspondant dans le mot de départ.

Selon une variante préférée de la présente invention, les données informatiques sont découpées en mots de 12 bits que l'on modifie par application d'un code de GOLAY (23, 12), un bit supplémentaire de parité étant ajouté aux mots de 23 bits ainsi obtenus, afin d'obtenir des mots de 24 bits. Les données informatiques ainsi codées sont ensuite réparties en images de 57 600 bits de départ, réparties en 2 400 mots de 24 bits que l'on transforme en 10 blocs de 24 lignes de 240 bits.

L'ordre d'un bit de départ dans la ligne correspond au rang module 240 du mot de départ qui contenait ledit bit de départ, le rang dans le bloc de la ligne contenant un bit de départ donné correspondant au poids dudit bit de départ dans le mot de départ.

Le procédé selon la présente variante, permet de transmettre, avec un taux d'erreur acceptable et une très grande protection à l'égard des perturbations correlées au support de transmission, un logiciel de 100 kilo-octets qui n'occupera que 14 images, soit à peine plus d'une demi-seconde d'image animée.

Le procédé de codage selon la présente invention est avantageusement mis en oeuvre pour l'enregistrement de donnnées informatiques sur un vidéodisque, les "images" correspondant aux données informatiques étant enregistrées sur chacune des deux trames d'une même spire d'un vidéodisque.

Cette variante est particulièrement bien adaptée au stockage de données informatiques sur vidéodisque, compte tenu de la grande capacité d'un tel support et de la protection quasi parfaite à l'encontre des perturbations correlées aux caractéristiques physiques du vidéodisque, notamment aux défauts liés au pressage du vidéodisque.

La présente invention concerne également un procédé de restitution de données informatiques transmises aux normes vidéo après codage selon le procédé de l'invention, consistant à reconstruire par transformation inverse des images de M mots de N bits permettant de reconstituer les données informatiques initiales après décodage selon le code auto-correcteur inverse approprié.

Selon une mise en oeuvre particulière, la restitution des données informatiques s'effectue par lecture des spires d'un vidéodisque sur lequel sont enregistrés les signaux analogiques correspondant auxdites données informatiques et que les "images" délivrées par le lecteur de vidéodisque sont transformées en images numériques de M mots de N bits permettant de reconstituer les données informatiques initiales après décodage selon le code auto-correcteur inverse approprié.

La présente invention concerne également un vidéodisque dont certaines au moins des pistes contiennent des images correspondant à des données informatiques codées selon le procédé de l'invention.

Selon un mode préféré, les premières spires du vidéodisque comportent des images correspondant à des données informatiques, les autres spires comportant des signaux correspondant à une image visualisable réelle. Les données informatiques constituent un programme d'interactivité et d'exploitation du vidéodisque.

Ce mode de réalisation est particulièrement bien adapté à des applications documentaires ou de formation du vidéodisque.

Ce programme peut notamment gérer le déplacement de la tête de lecture du lecteur de vidéodisque en fonction de paramètres d'interactivité avec l'utilisateur, gérer les incrustations de texte dans l'image et commander de façon générale toutes les fonctionnalités du lecteur de vidéodisque et de ses périphériques.

La présente invention concerne également une interface d'exploitation de vidéodisque comportant notamment des moyens de relecture binaire, munie de convertisseurs analogiques binaires, d'un microprocesseur destiné, notamment, à décoder les données informatiques stockées sur des vidéodisques selon la présente invention, d'une mémoire vive destinée au sotckage des données informatiques décodées.

Selon une variante, l'interface d'exploitation de vidéodisque selon la présente invention comporte, en outre, des moyens de chargement automatique en mémoire vive des données informatiques codées constituant un programme d'exploitation et d'interactivité, qu'un processeur graphique.

L'interface d'exploitation de vidéodisque selon la présente variante permet une exploitation automatique d'un vidéodisque quelles que soient la nature et les fonctionnalités du programme inscrit sous forme codée sur les premières spires dudit vidéodisque.

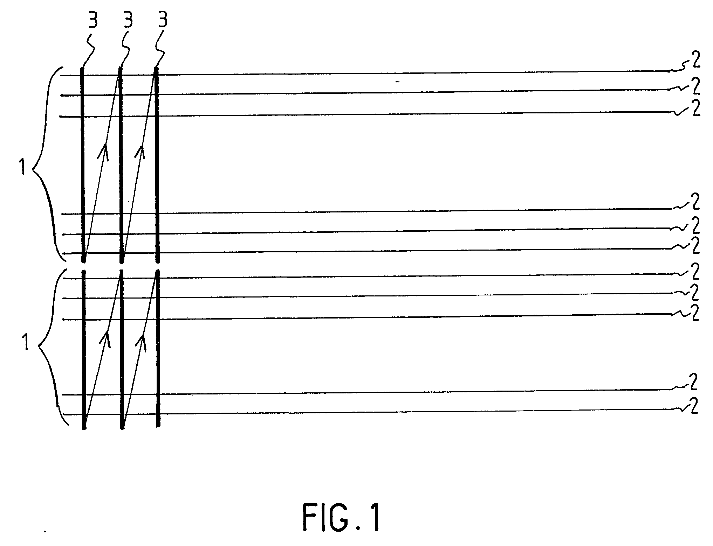

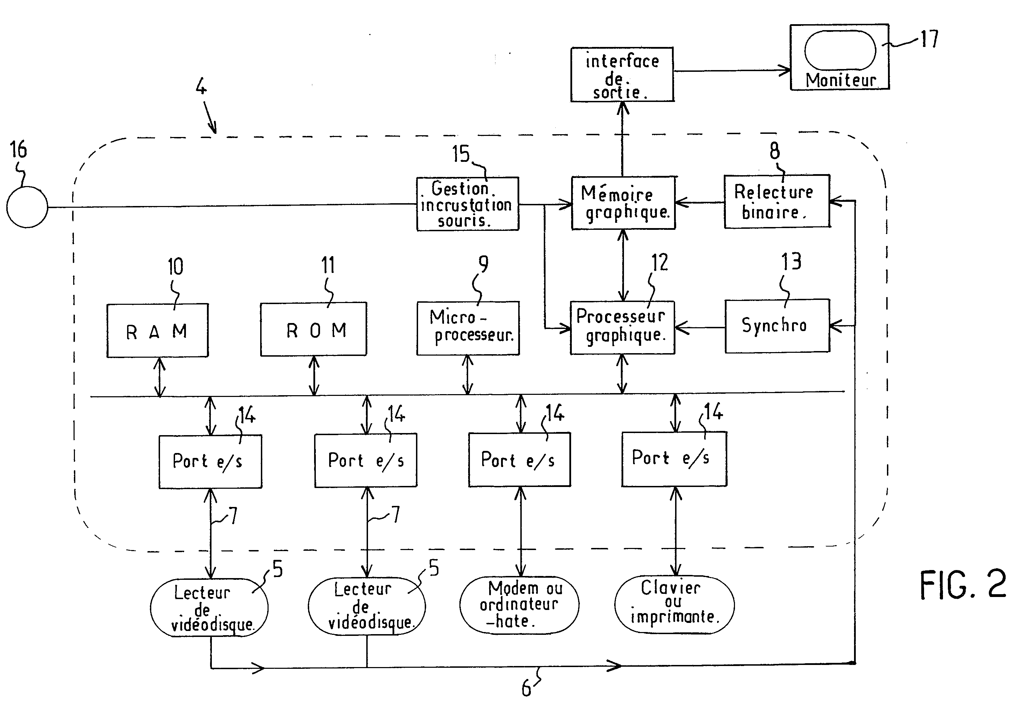

D'autres particularités et avantages de l'invention apparaîtront clairement de la description qui va suivre présentée à titre d'exemple non limitatif et s'appuyant sur les figures 1 et 2.

La figure 1 est une représentation visuelle du codage de données informatiques selon la présente invention.

La figure 2 représente le schéma général d'un système d'exploitation d'un vidéodisque comportant un programme codé selon la présente invention.

Les données informatiques considérées, correspondant par exemple à un logiciel, sont généralement organisées en mots de 16 bits comptatibles avec les microprocesseurs.

Afin de pouvoir appliquer un code auto-correcteur de GOLAY (23, 12), il est tout d'abord nécessaire de transformer les mots de 16 bits en mots de 12 bits selon un processus assurant le passage de séquences de 3 mots de 16 bits à 4 mots de 12 bits, constitués, pour les 3 premiers mots de sortie, des 12 premiers bits des mots d'entrée de 16 bits et, pour le quatrième mot de sortie, des 4 derniers bits de chacun des 3 mots d'entrée.

Entrée :
mot 1 : a1 a2 a3      a11 a12 a13 a14 a15 a16
mot 2 : b1 b2 b3      b16
mot 3 : c1 c2 c3      c16

Sortie :
mot 1 : a1 a2 a3      a11 a12
mot 2 : b1 b2 b3      b12
mot 3 : c1 c2 c3      c12
mot 4 : a13 a14 a15 a16 b13 b14      c15 c16.

On ajoute ensuite à chaque mot de sortie une séquence de 11 bits de test correspondant au code auto-correcteur de GOLAY (23, 12) pour passer de ces mots de 12 bits utiles au format de 23 bits.

Un 24ème bit de parité est ajouté à chacun des mots afin d'améliorer la détection et la correction d'erreur et afin de manipuler des mots d'un format pair mieux adapté au traitement informatique.

On obtient ainsi une succession de mots de 24 octets comportant 50 % de redondance introduite par le code auto-correcteur et pouvant être répartis en images fictives de 2 400 mots de 24 bits comportant 57 600 bits, soit la capacité d'une image aux normes vidéo. Le programme est "divisé" en autant d'images fictives que nécessaire, soit la taille du programme en octets divisé par 7 200.

A titre d'exemple, un programme de 100 000 octets occupe 8 images fictives.

Les 2 400 mots de 24 bits d'une image fictive sont ensuite retranscrits verticalement dans des blocs de 24 lignes, une image fictive étant divisée en 10 blocs superposés.

La figure 1 représente une image fictive, comportant des blocs (1) de 24 lignes (2). Les mots (3) sont transcrits verticalement dans les blocs (1).

A tout bit de départ de poids x dans un mot de rang y correspond un bit de l'image fictive.

Ce bit image occupera dans l'image fictive la ligne de rang x dans le bloc dont le rang correspond à la partie entière de $(x \times y)/ 5\,760$. Le poids du bit image dans la ligne correspondra au rang module 240 du mot dans l'image de départ. On réalise ainsi une bijection entre les données informatiques codées par le code de GOLAY et les images fictives obtenues après transformation selon la présente invention. Cette transformation s'effectue selon un traitement matriciel par logiciel ou par un processeur spécialisé de type connu.

Les séquences digitales ainsi obtenues sont ensuite traitées selon les techniques connues, pour être mises aux normes vidéo.

Ces signaux peuvent être transmis sur le réseau hertzien ou encore enregistrés sur un support de haute capacité, par exemple un vidéodisque.

Les défauts affectant un secteur de spire de vidéodisque entraîneraient une perturbation d'une portion de ligne importante et souvent supérieure aux capacités d'autocorrection d'un code du type GOLAY ou similaire, si on n'avait pas recours à une répartition "verticale" des mots de départ dans l'image fictive.

Cette répartition permet de distribuer les erreurs corrélées sur plusieurs mots et rend possible la restitution de la séquence de données informatiques avec un taux d'erreur requis, soit environ 10 puissance - 12.

La restitution du signal se fait en suivant un processus inverse, c'est-à-dire en retransformant le signal vidéo en un signal digital, en transformant les images fictives en chaînes de mots de 24 bits par une opération inverse et en décodant les mots de 24 bits selon le code de GOLAY (23, 12) inverse afin de restituer des mots de 12 bits permettant de reconstruire les données informatiques initiales organisées en mots de 16 bits.

Les données informatiques codées sont enregistrées sur les premières spires d'un vidéodisque.

Lors du chargement du vidéodisque, les premières spires sont lues éventuellement à vitesse lente, en vue du chargement des données informatiques dans une mémoire vive. On prévoira la relecture d'une spire en cas de détection d'erreur. Les signaux correspondant à une image fictive sont enregistrés sur chacune des deux trames d'une même spire du disque, afin d'en permettre un décodage facile en temps réel ou en temps différé.

L'enregistrement de chaque image fictive sur deux trames d'une même spire est rendue nécessaire par le fait que même avec des microprocesseurs modernes, le temps requis pour décoder 3 600 octets utiles, soit 57 600 bits codés, est de l'ordre de 3 secondes.

Ce délai impose donc un arrêt sur chacune des spires aussi longtemps que nécessaire pour en sortir l'information utile.

Du fait que l'arrêt sur image s'opère par spires entières chargées de trames convenablement apariées, chaque spire comporte deux images fictives identiques.

Ladite interface a pour but la réunion de la totalité des fonctions exigées par l'utilisation du processus à haut degré d'interactivité, exploitant notamment les programmes enregistrés sous une forme codée selon la présente invention sur les premières spires d'un vidéodisque.

L'interface rassemble notamment les fonctins logiques et graphiques indispensables :
- au chargement automatique du logiciel d'exploitation enregistré sur les premières spires du vidéodisque, dans les circuits logiques d'exécution,
- au décodage des signaux en question,
- à la manipulation du seul langage-machine compréhensible par le microprocesseur utilisé, éliminant ainsi les obstacles nés de la diversité de langage de programmation courant, ainsi que les difficultés de leur mise en oeuvre sur des machines d'origine différente,
- à la gestion des processus logiques capables de piloter un lecteur de vidéodisque en fonction des critères issus de la combinaison des différentes situations prédéterminées par le programme, avec les réactions de l'utilisateur,
- à la génération et à l'incrustation des graphismes avec une bande passante compatible avec les standards actuels de vidéodiffusion, destinée soit à compléter la signification de l'image vidéo proprement dite, soit à permettre le dialogue direct de l'utilisateur avec la machine au travers de la désignation d'icône ou de toute région de l'image chargée de signification conversationnelle,
- au couplage de ladite interface avec plusieurs types de périphériques annexes, tels que claviers, imprimantes, modems, ordinateurs.

L'interface (4) est reliée à un ou plusieurs lecteurs de vidéodisque (5).

Elle communique avec lesdits lecteurs de vidéodisque (5) par l'intermédiaire d'un BUS vidéo (6) véhiculant les signaux analogiques délivrés par le lecteur de vidéodisque et par des connections (7) véhiculant les signaux de commande de déplacement de la tête de lecture du vidéodisque, de la mise en route et de l'arrêt du lecteur de vidéodisque et de toutes ses autres fonctionnalités.

L'interface (4) comporte notamment des moyens de relecture binaire (8) comportant un convertisseur analogique numérique, ainsi qu'un abaisseur de débit utilisant un buffer interne ou la mémoire graphique comme mémoire intermédiaire.

Ce programme assure notamment le positionnement lors du chargement du vidéodisque de la tête de lecture sur la première spire du vidéodisque. Si le microprocesseur détecte un code auto-correcteur, il assure le traitement de l'image fictive et le chargement des données fictives dans la mémoire vive (10). S'il ne détecte pas de code auto-correcteur, il procède au déplacement de la tête de lecture sur l'image suivante. Ce processus est revouvelé jusqu'à ce que le microprocesseur détecte un code auto-correcteur dans les signaux qui lui sont transmis sur le BUS vidéo (6) ; une limite supérieure est fixée à la fenêtre de détection de la première image codée.

L'interface (4) comporte également un microprocesseur (9) destiné notamment au codage des images fictives. Lors du chargement du vidéodisque, le microprocesseur gère la lecture des premières spires dudit vidéodisque, effectue le décodage des données informatiques correspondantes et en assure le stockage dans une mémoire vive (10). Une mémoire morte (11) contient les instructions correspondant au programme de chargement et d'exploitation.

Pendant la phase de chargement, le processeur graphique (12) assure un simple transfert des signaux.

L'interface (4) comporte en outre un module de synchronisation (13) assurant la synchronisation du processeur graphique, ainsi que les différentes fonctions graphiques.

L'interface (4) comporte, de plus, un ou plusieurs ports d'entrée-sortie (14) permettant la connection de périphériques d'interactivité, par exemple des claviers, des imprimantes, des modèmes ou d'autres microordinateurs.

L'interface (4) comporte aussi un module de gestion de l'incrustation (15) commandé par une souris (16) ou une tablette graphique.

L'interface (4) délivre des signaux de sortie exploitables par tout périphérique de type connu, par exemple un moniteur (17).

La présente invention n'est en aucune façon limitée aux procédés décrits à titre d'exemples. Notamment, tout autre code auto-correcteur peut être employé, ainsi que toute autre répartition des bits dans les images fictives peut être envisagée, conformément à ce qui a été décrit précédemment.

Par ailleurs, l'interface d'exploitation peut comporter d'autres modules et fonctions que ceux décrits dans le présent exemple.

**Revendications**

1) Procédé de codage de données informatiques avant adaptation et transmission aux normes vidéo, consistant à coder préalablement lesdites données informatiques à l'aide d'un code auto-correcteur les transformant en images fictives de M mots de N bits de départ, caractérisé en ce que l'on transforme lesdits M mots de N bits de départ en N lignes de k bits, le poids de chaque bit étant associé à une ligne de même rang que le poids dudit bit de départ, l'ordre des bits dans la ligne étant défini préalablement de façon prédéterminée dans chacun des blocs.

2) Procédé de codage de données informatiques avant adaptation et transmission aux normes vidéo selon la revendication 1, caractérisé en ce que l'ordre des bits dans la ligne est défini préalablement de façon identique dans chacun des blocs.

3) Procédé de codage de données informatiques avant adaptation et transmission aux normes vidéo selon l'une quelconque des revendications 1 ou 2, caractérisé en ce que l'ordre d'un bit dans une ligne correspond au rang module k du mot qui contenait ledit bit à la sortie du code auto-correcteur, le rang de la ligne contenant un bit donné correspondant au poids dudit bit dans le mot le contenant à la sortie du code auto-correcteur.

4) Procédé de codage de données informatiques avant adaptation et transmission aux normes vidéo selon l'une quelconque des revendications 1 à 3, caractérisé en ce que l'on découpe les données informatiques considérées en mots de 12 bits, que l'on modifie lesdits mots par un code de GOLAY (23, 12), que l'on ajoute un 24ème bit de parité, que l'on répartit les données informatiques ainsi codées en images fictives de 57 600 bits de départ réparties en 2 400 mots de 24 bits, que l'on transforme lesdits mots en 10 blocs de 24 lignes de 240 bits, l'ordre d'un bit de départ dans la ligne correspondant au rang module 240 du mot de départ qui contenait ledit bit de départ, le rang dans le bloc de la ligne contenant un bit de départ donné correspondant au poids dudit bit de départ dans le mot de départ.

5) Procédé d'enregistrement de données informatiques sur un vidéodisque mettant en oeuvre le procédé de codage selon l'une quelconque des revendications 1 à 4, caractérisé en ce que lesdites images sont enregistrées sur chacune des deux trames d'une même spire d'un disque.

6) Procédé de restitution de données informatiques transmises aux normes vidéo après codage selon l'une quelconque des revendications 1 à 4, caractérisé en ce que l'on reconstruit par transformation inverse des images de M mots de N bits permettant de reconstituer les données informatiques initiales après décodage selon le code auto-correcteur inverse approprié.

7) Procédé de lecture de données informatiques enregistrées sur un vidéodisque sous forme codée selon la revendication 5, caractérisé en ce que le lecteur de vidéodisque lit chacune des spires sur lesquelles sont enregistrés les signaux vidéo correspondant auxdites données informatiques codées et que l'on transforme les images délivrées par le lecteur de vidéodisque en images numériques de M mots de N bits permettant de reconstituer les données informatiques initiales après décodage selon le code auto-correcteur inverse approprié.

8) Vidéodisque caractérisé en ce qu'au moins certaines des spires contiennent des images correspondant à des données informatiques codées selon l'une quelconque des revendications 1 à 5.

9) Vidéodisque selon la revendication 8, caractérisé en ce que les premières spires comportent des images correspondant à des données informatiques, les autres spires comportant des signaux correspondant à une image visualisable réelle, les données informatiques constituant un programme d'interactivité et d'exploitation du vidéodisque.

10) Interface d'exploitation d'un vidéodisque selon l'une quelconque des revendications 8 à 9, caractérisée en ce qu'elle comporte notamment des moyens de relecture binaire, munie de convertisseurs analogiques binaires, d'un microprocesseur destiné notamment à décoder les données informatiques stockées sur ledit vidéodisque, d'une mémoire vive destinée au stockage des données informatiques décodées.

11) Interface d'exploitation de vidéodisque selon la revendication 10, caractérisée en ce qu'elle comporte, en outre, des moyens de chargement automatique des données informatiques codées constituant un programme d'exploitation et d'interactivité dans la mémoire vive, ainsi qu'un processeur graphique.

FIG.1

FIG. 2

interface de sortie.

Moniteur — 17

4

16

15 Gestion incrustation souris.

Mémoire graphique.

8 Relecture binaire.

10 R A M

11 R O M

9 Micro-processeur.

12 Processeur graphique.

13 Synchro

14 Port e/s

14 Port e/s

14 Port e/s

14 Port e/s

7

7

5 Lecteur de vidéodisque.

5 Lecteur de vidéodisque.

Modem ou ordinateur -hate.

Clavier ou imprimante.

6

0299818

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 137 855 (SONY) <br> * Page 6, ligne 21 - page 14; figures 2-4 * <br> --- | 1-3,6, 10 | G 11 B 20/18 <br> G 11 B 20/10 <br> G 11 B 17/00 |
| A | EP-A-0 165 320 (SONY) <br> * Page 5, ligne 16 - page 18, ligne 2; figures 2-11 * <br> --- | 1-3,6, 10 | |
| A | JOURNAL OF THE SOCIETY OF MOTION PICTURE AND TELEVISION ENGINEERS, vol. 86, no. 4, avril 1977, pages 201-203, Scarsdale, N.Y., US; R.T. CAVANGH: "Educational/institutional features of the optical videodisc system" <br> * Page 202, colonne de droite, dernier paragraphe - page 203, colonne de gauche, ligne 3 * <br> --- | 1,9,10 | |
| A | US-A-4 397 022 (M.-J. WENG et al.) <br> * Colonne 2, lignes 56-64; figure 1 * <br> --- | 1,4 | DOMAINES TECHNIQUES RECHERCHES (Int. Cl.4) |
| A | GB-A-2 107 557 (RCA) <br> --- | | G 11 B |
| A | EP-A-0 178 589 (HITACHI) <br> --- | | |
| A | EP-A-0 180 764 (HITACHI) <br> --- | | |
| A | EP-A-0 222 386 (HITACHI) <br> --- | | |
| A | GB-A-2 060 311 (RCA) <br> ----- | | |

Le présent rapport a été établi pour toutes les revendications

| Lieu de la recherche | Date d'achèvement de la recherche | Examinateur |
|---|---|---|
| LA HAYE | 27-09-1988 | CARTRYSSE A.A.H. |